# EUROPEAN PATENT APPLICATION

(11) **EP 3 396 439 A1**
(43) Date of publication of application: **31.10.2018**
(21) Application number: 17305466.9
(22) Date of filing: 26.04.2017
(51) Int. Cl.: G02C 7/02, G02B 1/14

(54) **HYBRID GLASS AND PLASTIC LAMINATED LENSES AND METHOD OF MAKING SAME**

(71) Applicant: Essilor International, 94220 Charenton-le-Pont (FR)
(72) Inventor: JIANG, Peiqi, Dallas, TX 75234 (US); PADIOU, Jean-Marc, 94220 Charenton-le-Pont (FR)
(74) Representative: Allain, Laurent

(57) **Abstract**

Disclosed are glass and plastic hybrid ophthalmic lenses and methods of manufacture. The lenses include a first glass layer having a first base curve; a second adhesive layer; and a third plastic layer having a second base curve substantially similar to the first base curve, wherein the concave surface of the first glass layer is laminated to the convex surface of the third plastic layer, and wherein the optical power difference between the first glass layer and the third plastic layer is from 0 to 0.1 Diopter (D).

## Description

### CROSS REFERENCE TO RELATED APPLCATIONS

None.

### BACKGROUND OF THE INVENTION

### A. Field of the Invention

The invention generally concerns hybrid lenses. In particular, the invention provides a hybrid ophthalmic lens having a glass wafer laminated on the front side of a plastic lens wherein the glass wafer and plastic lens have substantially similar base curves. The hybrid lenses are intended for use in prescription sun lenses and polarizing or photochromic (e.g., Transitions@) lens applications.

### B. Description of Related Art

The scratch resistance properties of both plastic polarizing lenses and polarizing or photochromic lenses, even when hardcoated, are inferior compared to lenses having a glass surface. Thus, increasing the hardness of the outer surface of lenses by using glass is advantageous for outdoor lens applications (e.g., sunglasses, binoculars, etc.) in order to improve scratch resistance. Nonetheless, several drawbacks associated with glass and plastic hybrid lenses exist. The design of hybrid lenses having acceptable optical properties (e.g., optical power, prism correction, etc.) and mechanical properties (e.g., adhesion, impact resistance, etc.) can be difficult, impeding overall industrial applications.

Generally, there are two methods to make glass and plastic hybrid lenses. The first involves casting of a plastic lens with a glass wafer and the second includes lamination of a glass wafer onto a plastic lens using an adhesive. Due to the different mechanical properties of glass and plastic, casting of a plastic resin directly onto a glass surface can cause mechanical interface issues such as delamination. It is also very difficult to cast when the glass wafer is very thin (e.g. 1.0 mm). Choosing a specific adhesive with appropriate adhesive properties for laminating a glass wafer onto a plastic lens surface can relieve these issues.

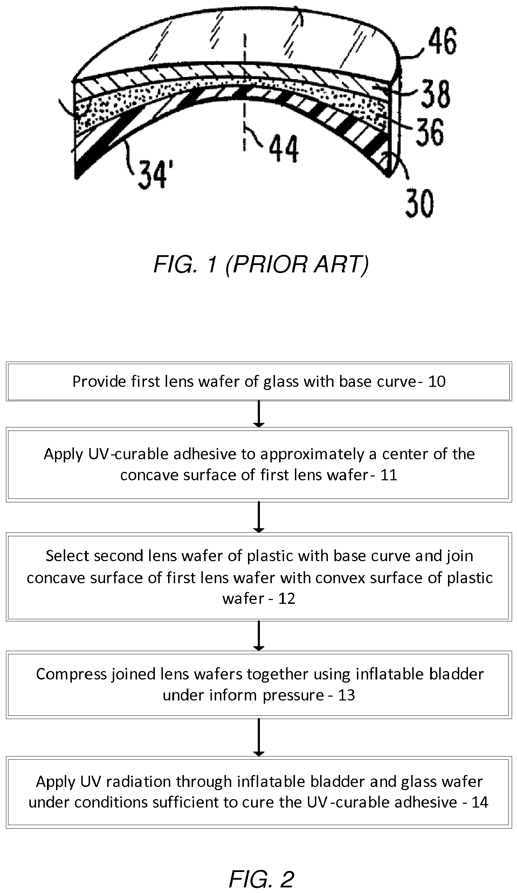

U.S. Patent No. 4,679,918 to Ace describes a composite glass/plastic ophthalmic lens consisting of a thin layer of glass adhered to the front of a plastic layer using a highly elastic adhesive shown in FIG. 1. The elastic adhesive (36) employed had an elongation above 100% to balance the different mechanical properties and the glass wafer (38) base curve and plastic lens (30) base curve were different, having a base curve difference greater than 0.12 Diopter with adhesive (36) filling the void. The resulting adhesive thickness variation across the entire lens was above 0.14 mm which could affect the optical power or prism design of the final lens.

### SUMMARY OF THE INVENTION

A discovery has been made that provides a solution to the problems associated with glass and plastic hybrid ophthalmic lenses. The solution resides in a new lamination process and adhesive system used to prepare hybrid lenses with improved properties. In particular, the current invention overcomes some of the technical difficulties associated with previous preparation methods of glass and plastic hybrid lenses. The resultant hybrid lenses contain a glass wafer and plastic lens with similar base curves, wherein the difference in optical power between these base curves can be from 0 and 0.1 Diopter (D). By using the disclosed lamination process under constant pressure with a photocurable adhesive, UV-curing with a uniform thickness variation across the lens surface of less than 0.1 mm can be achieved. Also, selecting a photocurable adhesive with a matching refractive index with the plastic lens affords a glass and plastic hybrid lens with overall improved optical and mechanical properties.

In particular embodiments of the present invention, there is disclosed a hybrid ophthalmic lens. The lens can include a first glass layer having a first base curve; a second adhesive layer; and a third plastic layer having a second base curve substantially similar to the first base curve, wherein a concave surface of the first glass layer can be laminated to a convex surface of the third plastic layer, and wherein the optical power difference between the first glass layer and the third plastic layer can be from 0 to 0.1 Diopter (D). In one aspect, the thickness of the second adhesive layer can be from 0.001 to 0.5 mm. In another aspect, the thickness of the second adhesive layer can vary less than 0.05 mm for an adhesive thickness from 0.1 mm to 0.5 mm, less than 0.005 mm for an adhesive thickness from 0.01 mm to 0.05 mm, and less than 0.0005 mm for an adhesive thickness from 0.001 mm to 0.005 mm. In certain aspects, the refractive index difference between the second adhesive layer and a concave surface of the third plastic layer can be less than 0.06 and/or the surface roughness of the third plastic layer can be from 0.005 to 0.50 µm. In a particular aspect, the second adhesive layer can be a photocurable adhesive, preferably a UV-curable adhesive. One advantage of the current invention is that the UV-curable adhesive can be cured by UV-irradiation through the first glass layer with low curing shrinkage. In some instances, the second base curve that is substantially similar to the first base curve can be achieved by lamination including inflating a silicon rubber bladder to apply pressure onto a convex surface of the first glass layer. In other instances, the third plastic layer can be a clear lens, a colored lens, a photochromic lens, a polarizing lens, or mixtures thereof. The third plastic layer can include polycarbonate, polyurethane, polyamide, poly(methyl methacrylate) (PMMA), poly(diethylene glycol bis(allyl carbonate)) (CR39), polythiourethane, epoxy polymer, episufide polymer, or mixtures thereof. The polarizing lens can be prepared by mold casting, injection molding, coating, or polar film surface lamination. The photochromic lens can also be prepared by coating, casting, injection molding or surface laminate. The first glass layer can include thermal shock resistant glass, mechanical shock resistant glass, toughened glass, tempered glass, or mixtures thereof.

Also disclosed is a method to prepare the hybrid ophthalmic lenses of the current invention. The method can include the steps: a) applying a UV-curable adhesive to approximately a center of the concave surface of the first glass layer; b) joining the concave surface of the first glass layer and the convex surface of the third plastic layer; c) compressing the first glass layer and the second plastic layer together under a uniform pressure; and d) applying UV radiation through the first glass layer under conditions sufficient to cure the UV-curable adhesive. In some aspects, the uniform pressure of step c) can be from 2 psi to 30 psi.

Other embodiments of the invention are discussed throughout this application. Any embodiment discussed with respect to one aspect of the invention applies to other aspects of the invention as well and vice versa. Each embodiment described herein is understood to be embodiments of the invention that are applicable to all aspects of the invention. It is contemplated that any embodiment discussed herein can be implemented with respect to any method or composition of the invention, and vice versa. Furthermore, compositions and/or packages of compositions of the invention can be used to achieve methods of the invention.

The phrase "base curve" is intended to define a measure of the curvature of a lens surface. For spectacle lenses (finished or semi-finished), the base curve is the curvature of the front side of the lens which is often the value that is indicated on a Rx chart for lens prescriptions. The base curve is typically given with 1.530 index but it is often a commercial naming. To calculate power, the curvature and refractive index of the lens must be determined.

The term "Diopter" (D) is the unit of the measure of an optical power of a lens or simply the surface which separates substrates having different refraction index. The optical power is the inverse of the focal distance. The focal distance is the distance from the lens to the focus point which is the point where all rays of a parallel beam are converged on or are diverged from. 1D = 1 m⁻¹ (i.e., 1/m).

The term "about" or "approximately" are defined as being close to as understood by one of ordinary skill in the art. In one non-limiting embodiment, the terms are defined to be within 10%, preferably within 5%, more preferably within 1%, and most preferably within 0.5%.

The term "substantially" and its variations are defined to include ranges within 10%, within 5%, within 1%, or within 0.5%.

The terms "wt.%," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt.% of component.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The hybrid lenses of the present invention can "comprise," "consist essentially of," or "consist of" particular ingredients, components, compositions, etc. disclosed throughout the specification. With respect to the transitional phase "consisting essentially of," in one non-limiting aspect, a basic and novel characteristic of the hybrid lenses of the present invention are a optical power difference between the glass and plastic layer is from 0 to 0.1 Diopter (D).

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

Advantages of the present invention may become apparent to those skilled in the art with the benefit of the following detailed description and upon reference to the accompanying drawings.
**FIG. 1** is a diagrammatic illustration of a prior art glass and plastic hybrid laminated lens.
**FIG. 2** is a flowchart illustrating a lamination process according to an embodiment of the current invention.
**FIG. 3** is diagram showing the UV-curing of a hybrid lens under compression according to an embodiment of the current invention.

### DETAILED DESCRIPTION OF THE INVENTION

A discovery has been made that provides a solution to the problems associated with glass and plastic hybrid ophthalmic lenses. The discovery is premised on a hybrid lens having increased adhesion between layers, a close refractive index between the adhesive and plastic layers, and increased control of the lamination process resulting in similar glass and plastic base curves wherein the difference in optical power between these base curves can be from 0 and 0.1 Diopter (D). In particular, the invention can provide a new generation of scratch-free and worry-free polarized and photochromic lens products (e.g., Transitions®).

These and other non-limiting aspects of the present invention are discussed in further detail in the following sections.

### A. Glass Layer

Embodiments of the present invention include hybrid ophthalmic lens having a first or outer glass layer. The glass lenses can be prepared by conventional methods or obtained from commercial vendors. The glass layer can include thermal shock resistant glass, mechanical shock resistant glass, toughened glass, tempered glass, or mixtures thereof. The glass layer can also include transparent minerals or crystals (e.g., sapphire).

### B. Plastic Layer

In other embodiments, the hybrid ophthalmic lenses of the present invention include a plastic layer. The plastic layer can be a clear lens, a colored lens, a photochromic lens, a polarizing lens, or mixtures thereof prepared by mold casting, injection molding, coating, or polar film surface lamination. In one aspect, the plastic layer can be composed of polycarbonate (PC), poly(methyl methacrylate) (PMMA), poly(diethylene glycol bis(allyl carbonate)) (CR39), polyolefinics, polyacrylates, polyesters, polyamides, polysiloxanes, polyimides, polyurethanes, polythiourethanes, polyallylics, polysulfides, polyepoxide, polyepisulfide, and polysulfones, or combinations thereof. Any substrate may be used so long as a glass layer can be attached thereto or applied thereon throught the use of a liquid adhesive. Any of the aforementioned materials can also be included in additional layers, including second, third, fourth, etc., and/or inner and intermediate layers. Any of these layers can include, for example, glass plates of silica glass, hard glass, etc.; quartz plates; plastic plates and sheets (films) of various materials such as polyvinyl butyral (PVB), resins, acrylonitrile butadiene styrene (ABS) resins, acetal resins, (meth)acrylic resins, cellulose acetates, chlorinated polyethers, ethylene-vinyl acetate copolymers, fluororesins, ionomers, methylpenetene polymers, nylons, polyamides, polycarbonates, polyesters [e.g. poly(ethylene terephthalate)s and poly(butylene terephthalate)s], polyimides, polyphenylene oxides, polyphenylene sulfides, poly(allyl sulfone)s, polyarylates, polyethylenes, polypropylenes, polystyrenes, polysulfones, vinyl acetate resins, vinylidene chloride resines, AS resins, vinyl chloride resins, alkyd resins, allyl resins, amino resins, urea resins, melamine resins, epoxy resins, phenolic resins, unsaturated polyester resins, silicone resins, polyurethanes, etc.; and products obtained by coating the surface of the glass plate, the quartz plate, or the plastic plate or sheet (film) with a metal oxide (e.g. silicon oxide, tin oxide, indium oxide, aluminum oxide, titanium oxide, chromium oxide or zinc oxide), silicon nitride, silicon carbide or the like. There can also be used substrates (films) whose surface has been coated with a metal thin film having a high reflectivity. In another aspect, the plastic layer of the hybrid ophthalmic lens can included at least one light filter capable of decreasing or increasing light transmission at specific ranges of wavelengths to provide dedicated light filtering function. The at least one specific light filter can include water soluble cut dyes or absorbers of UV, blue-violet, IR, or combinations thereof. Dichroic dyes can also be infused into the plastic layer for aesthetic purposes. The plastic layer may also include one or more of a polarizing, adhesive glue, hard, photochromic or an antireflective (AR) layer or coating.

Current mass produced polarizing or photochromic plastic lenses are prepared by mold casting, injection molding, coating, or surface lamination. For these processes, the surface quality / roughness of the lenses surface needs to be of sufficiently high quality to prevent subsequent cosmetic defects in the product being formed. By using a liquid adhesive with a matching index of refraction to the polarizing or photochromic lens, the requirement for high surface quality is reduced as the liquid adhesive can even out any imperfections (e.g., pits, cracks, scratches, waviness, indentations, or other aberrations) on the lens surface reducing defects. The surface roughness (Sq) of the plastic lens can be from 0.005 to 0.50 µm and all values and ranges there between (e.g., 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.22, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, or 0.49 µm)

### C. Adhesive Layer

The adhesive used to join the glass and plastic layers of the hybride ophthalmic lenses of the current invention can be formulated to adhere well to both glass and plastic surfaces allowing further processing (e.g., edging) without delamination. The adhesive layer can include a thermally cured and/or a UV-cured adhesive. The thermally cured adhesive can include any adhesive found to adhere plastic and glass lens known in the art. Exemplary thermally cured adhesives can include, but are not limited to, thermal curable polyurethane (e.g., 1K or 2K) adhesives that contain isocyanate and/or epoxy groups. Preferably the adhesive layer includes a UV-curable adhesive that can be free-radically cured from acrylate-based compositions. Urethane acrylates are known to the person skilled in the art. The adhesive layer can include, for example, mixtures of soluble urethane acrylates and/or methacylates with photopolymerizable monomers, for example acrylamides and/or methacrylamides, or acrylates and/or methacrylates, and one or more photoinitiator. Urethane acrylates were found to be a preferred free-radically curable resins for adhesion of glass and plastic due their polarity and flexibility. Preferably the urethane acrylate is a aliphatic urethane acrylate. Suitable aliphatic groups are, for example, straight-chain or branched C₁-C₁₂ alkyl, preferably C₁-C₆ alkyl and particularly preferably C₁-C₄ alkyl groups. These include, in particular, methyl, ethyl, propyl, isopropyl, n-butyl, 2-butyl, sec-butyl, tert-butyl, n-pentyl, 2-pentyl, 2-methylbutyl, 3-methylbutyl, 1,2-dimethylpropyl, 1,1-dimethylpropyl, 2,2-dimethylpropyl, 1-ethylpropyl, n-hexyl, 2-hexyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-2-methyl propyl, n-heptyl, 2-heptyl, 3-heptyl, 2-ethyl pentyl, 1-propylbutyl, octyl etc. Other variations include urethane oligomers that can contain multiple acrylate and/or methacrylate groups. Non-limiting urethane oligomers include aliphatic urethane acrylate oligomers, aliphatic polyether based urethane acrylate oligomers, aromatic polyether based urethane acrylate oligomers, and aliphatic polyester based urethane acrylate oligomers. Suitable examples of urethane oligomers that can be used in the present invention include aromatic polyether based urethane triacrylate oligomers (i.e., Sartomer CN972), urethane acrylate oligomers (i.e., Sartomer CN9018 and/or Sartomer CN9031), acrylic ester di-functional aliphatic urethane acrylate oligomers (i.e., Sartomer CN9021), or aliphatic polyester based urethane diacrylate oligomer blend (i.e., Sartomer CN966J75). Commerical Sartomer urethane oligomers are available from Sartomer Americas, Inc., PA. Sartomer CN966J75 is a 75% proprietary aliphatic urethane acrylate dispersed in 25% isobornyl acrylate.

In another aspect of the adhesive layer, a hydroxyl functionality can be included for robust adhesion to glass, an aromatic functionality for robust adhesion to plastic, and an additional acrylate to act as a reactive diluent and to avoid attack (hazing) of the plastic during prolonged exposure. The hydroxy-functionalized monomers can be, for example, 2-hydroxyethyl acrylate (HEA), 2-hydroxyethyl methacrylate (HEMA), 2-hydroxypropyl acrylate (HPA), 2-hydroxypropyl methacrylate (HPMA) and the like. The aromatic functionalized monomers can be, for example, benzyl acrylate and/or methacrylate, methoxy-benzyl acrylate and/or methacrylate, chlorobenzyl acrylate and/or methacrylate, furfuryl acrylate and/or methacrylate, phenoxyethyl acrylate and/or methacrylate, aryl acrylate and/or methacrylate (for example, phenyl acrylate and/or methacrylate, cresyl acrylate and/or methacrylate, and naphthyl acrylate and/or methacrylate) and/or the like.

Reactive diluents can also be used to control the viscosity of the adhesive formulation to facilitate application of the formulation to a substrate at room temperature. The additional acrylate to act as a reactive diluent in the UV-curable adhesive can be, for example, a wide variety of free-radically polymerizable monomers such as mono-acrylates and/or methacrylates such as methyl acrylate and/or methacrylate, ethyl acrylate and/or methacrylate, isopropyl acrylate and/or methacrylate, isooctyl acrylate and/or methacrylate, isobornyl acrylate and/or methacrylate, n-hexyl acrylate and/or methacrylate, stearyl acrylate and/or methacrylate, allyl acrylate and/or methacrylate, tetrahydrofurfuryl acrylate and/or methacrylate, 2(2-ethoxyethoxy)ethyl acrylate and/or methacrylate, 1,6-hexanediol diacrylate and/or dimethacrylate, 2-phenoxyethyl acrylate and/or methacrylate, ethoxylated nonyl phenol acrylate and/or methacrylate, or copolymerizable mixtures of acrylated monomers and/or acrylated oligomers, and/or the like.

In further aspects, the UV-curable adhesive composition of the current invention optionally includes a polyester oligomer. In one aspect, the polyester oligomer can be a chlorinated polyester oligomer or an acrylated polyester oligomer. Non-limiting examples of chlorinated and acrylated polyester oligomers can include Sartomer CN750 and Sartomer CN790 available from Sartomer Americas, Inc., PA, respectively. In other aspects, the polyester oligomer can be a carboxyl-functional polyester that can be any polyester resin including polymerizable acrylate or methacrylate monomers or oligomers that contains pendant free carboxylic acid, carboxylic acid salt, or carboxylate derivative moieties. A suitable example of carboxyl-functional polyester acrylate resin is Genomer 7151 available from Rahn USA Corp., IL. In other instances, the amount of carboxy-functionalized monomers or polyester oligomers in the UV curable adhesive composition can be reduced or eliminated to prevent certain cosmetic issues and/or possible phase separation during cure. Specifically, when a polyester oligomer is added to the photocurable composition the amount of urethane oligomers can decrease to between 39 and 53% based on the weight of the composition.

Free radical photoinitiators that can be included in the UV-curable adhesive compositions can be selected from those commonly used in UV-curable acrylate systems. Typical photoinitiators used in UV curable compositions include the Irgacure and Darocur product lines from Ciba Specialty Chemical Corp., NY, USA as well as the Omnirad product line from IGM Resins USA Inc., IL. Exemplary curing agents include 1-hydroxy-cyclohexyl-phenyl-ketone, phenylbis(2,4,6-trimethylbenzoyl)phosphine oxide, 2-hydroxy-2-methyl-1-phenyl-1-propanone, 2- benzyl-2-(dimethylamino)-1-(4-morpholinophenyl)-1-butanone, 2,2-dimethoxy-2-phenylacetophenone, 9,10-anthraquinone, 2-methylanthraquinone, 2-ethylanthraquinone, 2-tert-butylanthraquinone, octamethylanthraquinone, 1,4-naphthoquinone, 9,10-phenanthrenequinone, benz(a)anthracene-7, 12-dione, 2,3-naphthacene-5,12-dione, 2-methyl-1,4-naphthoquinone, 1,4-dimethyl-anthraquinone, 2,3-dimethylanthraquinone, 2-phenylanthraquinone, 2,3-diphenylanthraquinone, retenequinone, 7,8,9,10-tetrahydro-naphthracene-5,12-dione, and 1,2,3,4-tetra-hydrobenz(a)anthracene-7,12-dione, benzophenone, and derivatives thereof.

The UV-curable adhesives disclosed herein can be used to permanently bond plastic to glass. It is without limitation that the plastic wafers to be UV cured to glass could be pretreated or coated before adhesion. Exemplary hard coatings include, for example, a primer layer, an aminosilane layer, or a sol-gel coating to prevent scratches, abrasion and reduce handling defects. Since sol-gel coatings have a surface chemistry similar to glass, the glues also exhibit robust adhesion to the sol-gel coated plastic wafers. In some instances, pretreatment can include surface corona and/or plasma treatment that can be used to further increase adhesion. The composition can also be used as an adhesive or an adhesion primer on other substrates such as polycarbonate film, TAC (cellulose triacetate) film, PVA film, and Pebax film. All of the previously mentioned materials are envisioned to be used in the production of hybrid ophthalmic lenses. The hybrid ophthalmic lenses can also contain a photochromic coating.

The thickness of the adhesive layer of the hybrid ophthalmic lenses of the current invention can be from 0.001 to 0.5 mm and all values and ranges there between (e.g., 0.002, 0.003, 0.004, 0.005, 0.006, 0.007, 0.008, 0.009, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.22, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, or 0.49 mm). One method to help improve on the optical properties of hybrid lenses can include controlling the adhesive thickness variation between the surface of the glass wafer and the lens surface that are laminated. When the adhesive thickness variation is above a certain limit, such as above 0.1 mm, the final optical power and optical design of the hybrid glass and plastic lens can be negatively affected. In another aspect, the cured adhesive thickness should be substantially uniform, and the thickness variation across the entire surface of hybrid ophthalmic lenses can be less than 0.01, 0.02, 0.03, 0.04, 0.05, 0.06, 0.07, 0.08, 0.09, preferably less than 0.1 mm. Without being limited by theory, the adhesive thickness variation can vary based on adhesive thickness. In certain aspects, the thickness of the second adhesive layer can vary less than 0.05 mm for an adhesive thickness from 0.1 mm to 0.5 mm, less than 0.005 mm for an adhesive thickness from 0.01 mm to 0.05 mm, and less than 0.0005 mm for an adhesive thickness from 0.001 mm to 0.005 mm. The difference of refractive index between the cured adhesive layer and a concave surface of the plastic layer can be less than 0.01, 0.02, 0.03, 0.04, 0.05, preferably less than 0.06. In certain aspects, the difference of refractive index between the adhesive and the plastic lens surface (e.g., polaizing film or photochromic coating) can be between 0.005 and 0.05 and all values and ranges there between (e.g., 0.006, 0.007, 0.008, 0.009, 0.01, 0.02, 0.03, or 0.04).

### D. Method to Prepare Hybrid Ophthalmic Lenses

Further embodiments of the present invention include preparing a glass and plastic laminated ophthalmic lens which is resistant to delamination and exhibits the beneficial features of both glass and plastic lenses. These composite glass and plastic ophthalmic lenses can have photochromic properties capable of withstanding wide temperature extremes, provides enhanced optical characteristics, and provides improved shatter resistant.

Referring to FIG. 2, there is shown a series of exemplary steps to fabricate a laminate hybrid lens according to the present invention. In step 10, the first or outer or front lens wafer is made of glass having a base curve. The base curve can be any base curve useful for ophthalmic purposes, preferably the base curve is essentially similar to the base curve of the plastic lens wafer. In step 11, an UV-curable adhesive is applied to an approximate center of the concave surface of the glass lens. A second lens wafer of plastic with base curve is selected and joined from the convex surface via UV-adhesive to the glass wafer, per step 12. After the intermediary joined composite has been prepared, it is ready for lamination. Securing the intermediary assembly for lamination can be performed using known apparatuses and methods in the art. The laminating step can occurs at room temperature with a pressure of between 2 and 30 psi and all values and ranges there between (e.g., 2, 3, 4, 5, 6, 7, 8, 9, 10, 11, 12, 13, 14, 15, 16, 17, 18, 19, 20, 21, 22, 23, 24, 25, 26, 27, 28, or 29 psi). In step 13, an inflatable bladder may compress the joined lens wafers together under uniform pressure, for example between 10 and 25 psi. The bladder may be made from silicon, which is durable and avoids scratching the outward glass surface. This compressive pressure can be sufficient to press glass layer onto the plastic layer with uniform spreading and thickness of adhesive, even if the glass and plastic interfacial surfaces are of different base curves. Once the intermediary joined composite is secured under pressure of the silicon bladder, the intermediary assembly may be exposed to UV radiation under sufficient conditions to cure the adhesive, per step 14. Advantageously, the silicon bladder can be transparent or clear and configured to permit the passage of UV-radiation through the bladder and glass layer to contact the UV-curable adhesive. The UV-curable adhesive may be cured in a stepwise manner (e.g., controlled by selection of photoinitiator) so the adhesive might be set by a first UV-radiation and cured by subsequent UV-radiation. In this manner, pressure applied by the silicon bladder can also be stepwise to prevent over-pressurization and loss of adhesive from the side of the composite lens during pressure induced base curve matching. The composite lens can be further processed (e.g., edging) without delamination.

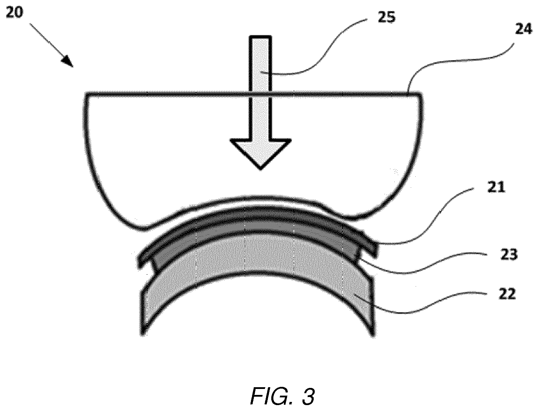

FIG. 3 depicts the UV-curing of a hybrid lens under compression according to an embodiment of the current invention. Compression and UV-curing assembly 20 includes glass layer 21, plastic layer 22, UV-curable adhesive 23, silicon bladder 24, and UV-radiation 25 emitted from a source (e.g., UV lamp not shown) travelling through silicon bladder 24. Control of the lamination curing step using a silicon bladder provides even pressure applied over the entire glass wafer before UV curing to assure that the adhesive layer cures with uniform thickness.

In ophthalmic calculation, the base curve of the semi-finished (SF) or the finished lens is the front side. The choice of the curvature will depend on the prescription. Getting the front curve and other lens parameters (refraction index, diameter, thickness), the back surface can then be calculated. For SF lenses, only few back spheres we used to give enough material to remove in Rx surfacing. Usually these surfaces don't need high precision. For finished lenses, far more spheres are able to produce 0.25 D steps in the dedicated range (plus possible cylinders). The curvature of molds should be appropriate taking account lens thickness and material shrinkage. The required precision and quality are often higher than for SF back molds.

Without being limited by theory, it is desired to get the front side base curve of the plastic lens as close as possible to back side of the glass wafer. When the plastic lens base curve does not match that of the glass wafer, surfacing of the lens front curve (e.g., digital surfacing) can be performed to closely match the base curve as the glass wafer (e.g. between 0 and 0.1 Diopter) for hybrid lamination.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

Glass wafers were obtained from CORNERSTONE Ltd. Semi-finished polycarbonate lenses and cellulose triacetate polar wafer laminated 1.67 semi-finished lenses were obtained from Essilor International. Photochromic coated CR-39 SF lenses were obtained from Transitions.

### Example 1 (Preparation of a Glass and PC hybrid lens)

A commercial glass wafer with a substantially uniform thickness of 1.0 mm and back base curve of 6.25 D was laminated onto a semi-finished (SF) polycarbonate (PC) lens with a thickness of about 8 mm. The front surface of the SF PC lens was pre-surfaced to get a base curve as close as possible to match the glass wafer. A UV-curable adhesive was placed onto the approximate center of the glass wafer and the SF PC lens was then positioned such that an outer surface of the PC lens contacted the adhesive at the center of the glass wafer. The glass-plastic assembly was then pressed under a constant pressure of about 10 psi to spread out the liquid UV adhesive evenly to the edge of the glass wafer. UV light was then irradiated through the glass wafer for about 20 to 40 seconds under pressure to afford the adhered glass laminated PC hybrid lens with good optics. Good adhesion was verified by surfacing and edging without delamination. The adhesive thickness across the entire lens was 0.43 ± 0.03 mm.

### Example 2 (Preparation of a Glass and TAC laminated lens)

Example 1 was repeated with a cellulose triacetate (TAC) polar wafer laminated 1.67 semi-finished (SF) lens to replace the PC SF lens. The front base curve of this TAC laminated lens was about 6.30 D. The TAC polar wafer had some surface scratching during the lamination process. After the TAC polar lens was laminated to the glass wafer with UV-curable adhesive, the obtained lens showed good cosmetics and optics by visual inspection. Surface defects were filled by the liquid adhesive leaving no gaps or air pockets. Good adhesion was verified by no delamination during surfacing and edging steps. The base curve difference between glass wafer and TAC polar lens was about 0.05 Diopter.

### Example 3 (Preparation of a Glass and CR-39 hybrid lens)

Example 1 was repeated with a photochromic coated CR-39 SF lens to replace the PC SF lens with a lamination pressure of about 20 psi. The front base curve of this photochromic coated CR-39 SF lens was about 6.25 D. The photochromic coating was previously applied on the CR-39 SF with some level of cosmetic defects on the surface. After lamination to the glass wafer with UV-curable adhesive, the obtained lens showed good cosmetics and optics by visual inspection. The coating defects were filled by the liquid adhesive. The adhesive thickness across the entire lens was 0.23 ± 0.02 mm. Good adhesion was verified by no delamination during surfacing and edging steps.

Although the base curve used in the above examples was about 6.25 D, other base curves of glass and plastic are anticipated to also work as long as the difference between the lens is between 0-0.10 D. Also, the current invention is not limited to glass and plastic hybrid lens, it can be applied to any type of curved lenses that can be laminated.

## Claims

1. A hybrid ophthalmic lens comprising:
a first glass layer having a first base curve;
a second adhesive layer; and
a third plastic layer having a second base curve substantially similar to the first base curve,
wherein a concave surface of the first glass layer is laminated to a convex surface of the third plastic layer, and wherein the optical power difference between the first glass layer and the third plastic layer is from 0 to 0.1 Diopter (D).

2. The hybrid ophthalmic lens of claim 1, wherein the thickness of the second adhesive layer is from 0.001 to 0.5 mm.

3. The hybrid ophthalmic lens of claim 2, wherein the thickness of the second adhesive layer varies less than 0.05 mm for an adhesive thickness from 0.1 mm to 0.5 mm, less than 0.005 mm for an adhesive thickness from 0.01 mm to 0.05 mm, and less than 0.0005 mm for an adhesive thickness from 0.001 mm to 0.005 mm.

4. The hybrid ophthalmic lens of claim 1, wherein the refractive index difference between the second adhesive layer and a concave surface of the third plastic layer is less than 0.06.

5. The hybrid ophthalmic lens of claim 1, wherein the surface roughness of the third plastic layer is from 0.005 to 0.50 µm.

6. The hybrid ophthalmic lens of claim 1, wherein the second adhesive layer is a UV-curable adhesive.

7. The hybrid ophthalmic lens of claim 6, wherein the UV-curable adhesive is cured by UV-irradiation through the first glass layer.

8. The hybrid ophthalmic lens of claim 7, wherein the UV-curable adhesive has low curing shrinkage.

9. The hybrid ophthalmic lens of claim 1, wherein the second base curve substantially similar to the first base curve is achieved by lamination comprising inflating a silicon rubber bladder to apply pressure onto a convex surface of the first glass layer.

10. The hybrid ophthalmic lens of claim 1, wherein the third plastic layer is a clear lens, a colored lens, a photochromic lens, a polarizing lens, or mixtures thereof.

11. The hybrid ophthalmic lens of claim 10, wherein the polarizing lens is prepared by mold casting, injection molding, coating, or polar film surface lamination.

12. The hybrid ophthalmic lens of claim 1, wherein the third plastic layer comprises polycarbonate, polyurethane, polyamide, poly(methyl methacrylate) (PMMA), poly(diethylene glycol bis(allyl carbonate)) (CR39), polythiourethane, epoxy polymer, episufide polymer or mixtures thereof.

13. The hybrid ophthalmic lens of claim 1, wherein the first glass layer comprises thermal shock resistant glass, mechanical shock resistant glass, toughened glass, tempered glass, or mixtures thereof.

14. A method to prepare the hybrid ophthalmic lens of claim 1 comprising the steps:
a) applying a UV-curable adhesive to approximately a center of the concave surface of the first glass layer;
b) joining the concave surface of the first glass layer and the convex surface of the third plastic layer;
c) compressing the first glass layer and the second plastic layer together under a uniform pressure; and
d) applying UV radiation through the first glass layer under conditions sufficient to cure the UV-curable adhesive.

15. The method of claim 14, wherein the uniform pressure of step c) is from 2 psi to 30 psi.
